Europäisches Patentamt

(19) European Patent Office  (11) Numéro de publication: **0 097 576**

Office européen des brevets  **B1**

(12) **FASCICULE DE BREVET EUROPEEN**

(45) Date de publication du fascicule du brevet: **19.11.87**  (51) Int. Cl.⁴: **G 02 B 6/36**

(21) Numéro de dépôt: **83401193.4**

(22) Date de dépôt: **10.06.83**

(54) **Embout de centrage pour fibre optique.**

(30) Priorité: **22.06.82 FR 8210907**

(43) Date de publication de la demande:
**04.01.84 Bulletin 84/01**

(45) Mention de la délivrance du brevet:
**19.11.87 Bulletin 87/47**

(84) Etats contractants désignés:
**DE GB IT**

(56) Documents cités:
**EP-A-0 026 139**
**EP-A-0 048 561**
**EP-A-0 063 068**
**FR-A-2 310 578**
**FR-A-2 310 579**
**FR-A-2 503 388**
**US-A-4 113 346**

**PATENTS ABSTRACTS OF JAPAN, vol. 5, no.
56(P-57)(728), 17 avril 1981**

**PATENTS ABSTRACTS OF JAPAN, vol. 1, no.
35, 15 avril 1977, page 1995E76**

(73) Titulaire: **SOCAPEX**
**10 bis, quai Léon Blum**
**F-92153 Suresnes (FR)**

(72) Inventeur: **Parchet, Pierre**
**THOMSON-CSF SCPI 173, bld Haussmann**
**F-75379 Paris Cedex 08 (FR)**
Inventeur: **Dalle, Didier**
**THOMSON-CSF SCPI 173, bld Haussmann**
**F-75379 Paris Cedex 08 (FR)**

(74) Mandataire: **Clanet, Denis et al**
**Cabinet Beau de Loménie 55, rue d'Amsterdam**
**F-75008 Paris (FR)**

## Description

La présente invention a pour objet un embout de centrage pour fibre optique.

La qualité d'une connexion optique, c'est-à-dire de la mise en vis-à-vis deux fibres optiques dépend de trois facteurs géométriques:

la distance entre les deux faces optiques des fibres;

le mésalignement axial;

et le mésalignement angulaire.

On connaît déjà des embouts à rappel axial élastique permettant d'obtenir constamment un contact entre les deux faces optiques.

D'autre part, on connaît également des techniques de transfert de précision assurant un positionnement très précis de l'axe de la fibre par rapport aux surfaces de références de l'embout.

Pour obtenir des connecteurs de bonne performance, il est également nècessarie d'assurer la troisième condition étant donné que l'atténuation causée par un mésalignement angulaire est un paramètre trés sensible. Par example, pour une fibre 50/125 micro-metres, 1° d'angle de mésalignement angulaire entraîne une perte à la connexion de 0,25 décibel.

La présente invention a pour objet un embout de centrage pour fibre optique de structure telle qu'elle permet de minimiser le mésalignement angulaire de la fibre dans l'embout.

Dans EP—0 026 139, on a proposé un embout autocentrant pour fibre optique et le procédé de centrage et d'immobilisation de cette fibre dans l'embout. Selon cet art antérieur, la fibre nue est directement scellée dans son embout, la réfèrence de centrage de la fibre étant l'embout lui-même. Pour obtenir ce résultat, on imprime au matériau de scellement injecté un mouvement giratoire qui assure le centrage.

Le brevet EP—0 048 561 propose un embout de connecteur de fibre optique dans lequel la fibre pourvue d'une gaine de protection est guidée dans un manchon de cetrage arriére, l'extrémité dénudé de la fibre etant ensuite guidée dans un cône de centrage intermédiaire quitermine ledit manchon pur être enfin reçue dans la tros de centrage d'un élément d'alignement monté sur l'avant de l'embout l'espace entre le cone de centrage intermédiaire et l'element d'alignement avant étant rempli de matériau de scellement.

Le brevet US—A—4 113 346 propose un embout consistant en un cylindre creux dont la partie antérieure comporte un orifice de sortie de la fibre nue alors que sa partie postérieure a un diamètre interne correspondant au diamètre externe de la fibre revêtue de sa gaine. Le matériau de scellement est injecté entre l'extrémité de la fibre revêtue et l'orifice de sortie. Des moyens de positionnement sont prévus pour le cylindre et la fibre nue lors de l'opération de scellement.

Dans EP—0 063 068 qui constitue demande de brevet europeen telle que définie à l'Article 54(3)(BE), on a proposé un procédé de montage concentrique d'une fibre optique dans un embout. Dans ce procédé, le manchon postérieur dans lequel est introduite la fibre pourvue d'une gaine de protection a des dimensnons très précises et lors de l'injection du matériau de scellement on maintient l'extrémité de la fibre dénudée dans un centreur ayant lui aussi des dimensions très précises. Dans ce procédé, il est nécessaire après scellement de la fibre et retrait du centreur, de procéder au dépôt d'une goutte de résine sur la face antérieure de l'embout.

Les embouts de la technique antérieure considérés ci-dessus ont été conçus sans que soit portée une attention particuliére au problème du mésalignement angulaire.

L'invention concerne ainsi un embout de centrage pour un fibre optique pourvue d'une gaine de protection mécanique, comprenant un corps de forme généralement cylindrique présentant une partie avant et une partie arrière et étant percé axialement de trous de diamètres décroissant progressivement de l'arrière vers l'avant de l'embout pour permettre le passage de la fibre, la fibre étant destinée à être introduite par l'arrière de l'embout pour être reçue avec un jeu donné par son extrémité dénudée de sa gaine de protection au travers d'un trou de centrage situé à l'avant de l'embout, l'un desdits trous adjacent audit trou de centrage constituant une cavité réceptrice d'une colle destinée à fixer la fibre dans l'embout, la colle étant destinée à etre introduite par un trou d'amenée débouchant dans ladite cavité receptrice, ledit embout comportant en outre un manchon cylindrique logé dans l'un desdits trous situé à l'arrière de l'embout, ledit manchon étant percé axialement d'un alésage calibré destiné à permettre le passage avec jeu de la partie gainée de la fibre, le manchon étant suffisamment long et arrivant par son extrémité antérieure suffisamment prés du trou de centrage pour que la longeur de la cavité récéptrice de colle, et donc la distance sur laquelle la fibre est destinée à être collée, soient suffisamment faibles pourne pas provoquer d'atténuation dans la fibre, l'alésage calibré du manchon ayant un diamètre sensiblement égal à celui de ladite fibre lorsqu'elle possède sa gaine de protection augmenté de la somme de la tolérance d'excentrement entre l'axe du trou de centrage du corps d'embout et l'axe de l'alésage calibre du manchon et de la tolérance d'excentremment de ladite gaine de protection de la fibre.

Selon un mode de réalisation, l'embout comporte un V d'alignement.

Le trou de centrage peut avoir un diamètre égal à environ 2,5 fois le diamétre de la fibre nue.

L'alésage du manchon fixe a de préférence un diamètre égal à environ 1,5 fois le diamètre de la fibre gainée.

Le manchon fixe peut avoir une longueur de l'ordre de 10 à 15 mm et la cavité une longueur de l'ordre 5 mm. Le manchon fixe peut être une pièce métallique montée à force dans un corps d'embout en matière plastique.

La partie arrière du manchon fixe est de préférence positionnée par rapport au trou de centrage de manière à donner lieu à un mésalignement angulaire nominal nettement inférieur à 1° d'angle, par exemple 0,3° (0,005 radian).

L'invention sera mieux comprise à la lecture de la description qui va suivre donnée à titre d'exemple non limitatif en se reportant aux dessins ci-annexé où:

la figure 1 est une coupe longtidunale d'un embout selon l'invention;

les figures 2 et 3 illustrent l'influence du jeu de la fibre dans l'alésage du manchon fixe sur l'alignement angulaire de la fibre;

la figure 4 est une coupe longitudinale de l'embout de la figure 1 monté selon l'invention.

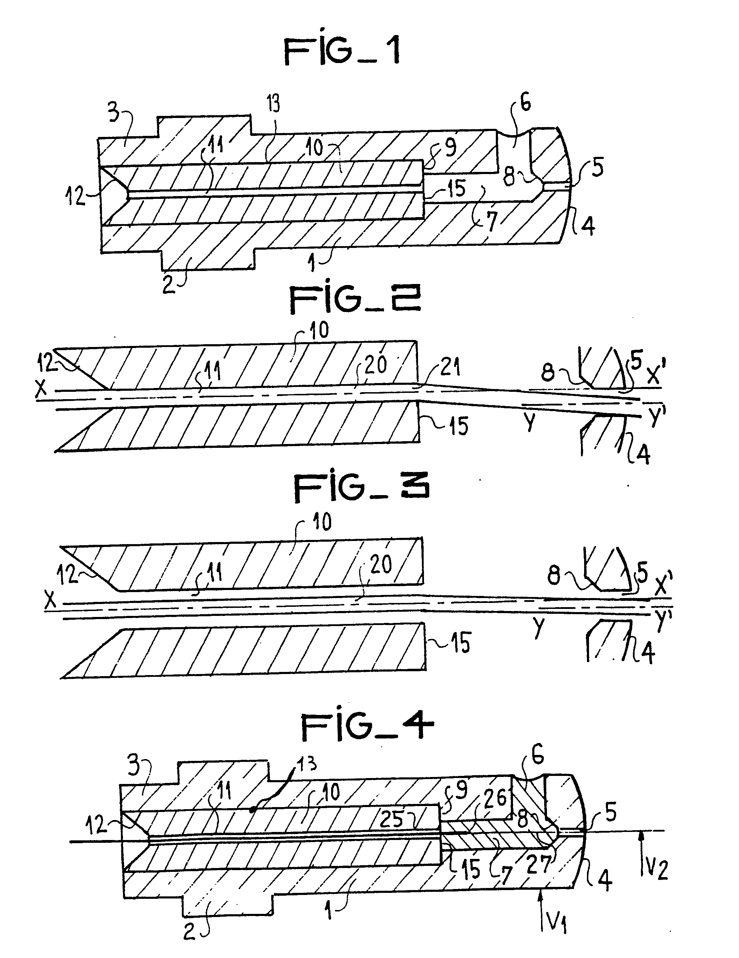

Selon la figure 1, l'embout comporte une partie cylindrique avent 1, une collorette 2 de montage de l'embout à l'extrèmité d'un corps de fiche, et une partie cylindrique arrière 3. A sa partie avant, le corps d'embout comporte une portion arrondie 4 au centre de laquelle débouche un trou calibré 5. Ce trou 5 a un diamètre supérieur à celui d'une fibre nue, de manière à ce que celle-ci puise être centrée à l'extrémité de l'embout avec précision grâce à un outillage approprié. Ce trou 5 se prolonge vers l'arrière du corps d'embout par un chanfrein conique 8 destiné à faciliter l'introduction de la fibre dans le trou calibré 5, ce chanfrein conique 8 s'évassent jusqu'à une cavité cylindrique 7 dans laquelle sera réalisé le maintien de la fibre par collage. Un alésage transversal 6 débouche dand la cavité cylindrique 7 de manière à permettre l'introduction de colle dans celle-ci une fois que la fibre aura été positionnée par un appareillage approprié. La cavité cylindrique 7 se prolonge ver l'arrière par un alésage 13 de diamètre plus grand que celui de la cavité et qui s'étand jusqu'à l'arrière de l'embout. Cet alésage 13 est destiné à recevoir un manchon cylindrique 10 présentant axialement un alésage calibré 11 s'étendant d'une extrémité à l'autre du manchon 10. La partie avant du manchon 10 se termine par un plan 15 qui vient en butée dans un décrochement 9 raccordant la cavité cylindrique 7 et l'alésage 13. A sa partie arrière, le manchon 10 comporte und portion tronconique 12 s'étendent depuis son diamètre extérieur jusqu'à son alésage axial 11 est destiné à faciliter l'introduction de la fibre dans le manchon.

L'alésage 11 du manchon 10 permet un alignement angulaire de la fibre optique par rapport au trou calibré 5, qui est d'autant plus efficace que le manchon 10 est plus long. Toutefois, pour que cet alignement angulaire soit obtenu dans de bonnes conditions, il faut tenir compte des tolérances de concentricité que interviennent lors de la réalisation des pièces.

Comme le montre la figure 2, si la fibre optique 20 est introduite avec coulissement mais sans jeu dans l'alésage 11 du manchon 10, celle-ci va être positionnée avec précision dans le manchon jusqu'à sa sortie en 21 de celui-ci. Si on suppose que la manchon 10 a un axe longitudinal XX', et le trou calibré 5 a une axe longitudinal YY' décalé par rapport à celui-ci, on voit que, étant donné que la fibre a une position très précise à la sortie du manchon 10, celui-ci non seulement ne corrige pas le mésalignement angulaire mais au contraire le provoque de manière systématique.

Selon la figure 3, l'alésage 11 est plus grand que la fibre 20, ce qui permet à celle-ci de se positionner par elle-même suivant une droite, la flèche que pourrait prendre la fibre étant limitée par l'alésage 11 et le mésalignement angulaire étant quant à lui limité en valeur absolue par le débattement que peut prendre la fibre à l'arrière du manchon 10. Les meilleurs résultats seront obtenus en choisissant le dimètre de l'alésage 11 du manchon fixe 10 égal à celui de la fibre gainée augmenté d'une quantité égale ou légèrement supérieure à la tolérance d'excentrement entre l'axe YY' du trou 5 de centrage et l'axe XX' de l'alésage 11 du manchon, ainsi que de la tolérance d'excentrement de la gaine de la fibre. Ainsi le manchon 10 permet, à sa partie arrière le rattrapage de l'alignement de la fibre (avec un mésalignement angulaire de préférence nettement inférieur à 1°), alors que sa longueur permet d'une part de limiter la flèche de la fibre et d'autre part de diminuer le volume de la cavité et donc de limiter le volume de colle. En effet, le retrait de l colle lors de sa polymérisation engendre une contrainte au niveau de la fibre, qui est susceptible de produire un atténuation. En pratique, cette atténuation peut être en première approximation considérée comme proportionelle au volume de colle utilisé. Pour un colle du type époxy, on utilisers a en pratique un volume inférieure ou égal à 3 mm$^3$. Pour déterminer, dans le cas général, les volumes de colle convenable, il suffit de mesurer l'atténuation produite et son évolution lors de la polymérisation de la colle. Le volume de colle sera acceptable quand pratiquement plus de changement d'atténuation n'interviendra lors de la polymérisation.

A titre d'exemple, pour un fibre nue de diamètre extérieur 125 microns-metres, la fibre gainée ayant un diamètre extérieur d'environ 200 micro-métres, le manchon a une longueur de 14 mm et son alésage 11 un diamètre de 0,3 mm, pour une longueur totale de l'embout de 20 mm. La cavité 6 a une longueur de 5 mm et un diamètre de 0,7 mm. Le trou de centrage 5 a une longueur d'environ 0,5 mm (1 mm avec la chanfrein 8) et un diamètre de 0,3 mm. Un tel embout et plus particulièrement la partie arrière du manchon 10 permet d'aligner la fibre dans un cône d'angle au sommet 10$^{-2}$ radians (soit un débatement angulaire de $\pm$ 0,3° environ).

Selon la figure 4, la fibre optique comporte un région 25 dans laquelle elle conserve sa gaine de protection (de diamètre 180 à 200 micrométres, pour une fibre 50/125 micrométres), et une région 27 où la fibre optique est une, c'est-à-dire qu'elle ne conserve le cas échéant que sa gaine optique. L'extrémité 26 de la gaine de protection de la fibre optique dépasse vers l'avant du manchon 10 de telle sorte que la colle qui remplit le trou 6 et la cavité 7 entoure la portion 27 de la fibre nue et une partie de la portion 25. Ceci permet d'obtenir d'une part une meilleure fixation de la fibre dans l'embout et d'autre part de ne pas laisser de région où la fibre reste nue.

Pour réaliser le centrage de la fibre 20 dans l'embout, celle-ci est préalablement dénudée sur une partie de sa longueur puis introduite dans l'alésage 11 du manchon 10 de telle sorte que l'extrémité 26 de la gaine de protection dépasse du pan coupé 15 du manchon 10 et que la région 27 de fibre nue dépasse du trou calibre 5. L'embout, qui est cylindrique ou de préférence muni à sa partie inférieure d'un V de positionnement, est positionné sur un premier V (V₁) au niveau de sa partie cylindrique 1. Ce premier V (V₁) est ménagé dans une pièce de précision qui comporte également un second V (V₂) parallèle au premier, mais décalé axialement d'une quantité donnée de telle sorte que, lorsque l'embout est positionné dans le premier V (V₁), la position de centrage de la fibre est donnée par le second V (V₂) dont l'axe est situé dans un même plan vertical que celui du premier V (V₁). On introduit ensuite la colle par le trou 6 dans la cavité 7, l'extrémité de la fibre 5 étant ensuite coupée après séchage ou polymérisation de la colle et polie.

## Revendications

1. Embout de centrage pour une fibre optique pourvue d'une gaine de protection mécanique, comprenant un corps de forme généralement cylindrique présentant une partie (1) avant et une partie arrière (3) et étant percé axialement de trous de diamètres décroissant progressivement de l'arrière vers l'avant de l'embout pour permettre le passage de la fibre, la fibre étant destinée à être introduite par l'arrière de l'embout pour être reçue avec un jeu donné, par son extrémité dénudée de sa gaine de protection au travers d'un trou de centrage (5) situé à l'avant de l'embout, l'un desdits trous adjacent audit trou de centrage constituant une cavité (7) réceptrice d'une colle destinée à fixer la fibre dans l'embout, la colle étant destinée à être introduite par un trou d'amenée (6) débouchant dans ladite cavite réceptrice, ledit embout comprenant en outre un manchon cylindrique (10) logé dans l'une desdits trous (13) situé à l'arrière de l'embout, dedit manchon étant percé axialement d'un alésage calibré (11) destiné à permettre le passage avec jeu de la partie gainée de la fibre, le manchon étant suffisamment long et arrivant par son extrémité antérieure suffisament près du trou de centrage (5) pour que la longeur de la cavité réceptrice de colle, et donc la distance sur laquelle la fibre dest déstinée à être collée, soient suffisament faibles pour ne pas provoquer d'attenuation dans la fibre, l'alésage calibre (11) du manchon (10) ayant un diamètre sensiblement égal à celui de ladite fibre lorsqu'elle possède sa gaine de protection, augmenté de la somme de la tolérance d'excentrement entre l'axe (YY') du trou de centrage (5) du corps d'embout et l'axe (XX') de l'alesage calibré (11) du manchon det de la tolérance d'excentrement de ladite gaine de protection de la fibre.

2. Embout selon la revendication 1, caractérisé en ce que l'alésage (11) du manchon (10) a un diamètre égal à environ 1,5 fois le diamètre de la fibre possédant sa gaine de protection.

3. Embout selon l'une quelconque des revendications 1 ou 2, caractérisé en ce que le manchon (10) a une longueur de l'ordre de 10 à 15 mm.

4. Embout selon l'une quelconque des revendications précédentes, caractérisé en ce que le manchon (10) a une longueur de 14 mm pour un alésage (11) de 0,3 mm, la cavité (7) a une longeur de 5 mm pour un diamètre de 0,7 mm, le trou de centrage (5) a une longueur de 1 mm pour un diamètre de 0,3 mm et un chanfrein conique (8) de 0,5 mm.

5. Embout selon l'une quelconque des revendications précédentes, caractérisé en ce que le manchon (10) est une pièce métallique montée à force dans un corps d'embout en matière plastique.

## Patentansprüche

1. Zentrierstück für einen mit einer mechanischen Schutzhülle versehenen Lichtleiter, mit einem im wesentlichen zylindrischen Körper, der einen vorderen Abschnitt (1) und einen rückwärtigen Abschnitt (3) aufweist und axial mit Löchern versehen ist, deren Durchmesser vom rückwärtigen Bereich zum vorderen Bereich des Zentrierstücks zunehmend kleiner werde, um den Lichtleiter hindurchtreten zu lassen, wobei der Lichtleiter von der rückwärtigen Seite des Zentrierstücks eingeführt werden soll, damit sein von der Schutzhülle entblößtes Ende mit vorgegebenem Spiel in einer im vorderen Teil des Zentrierstücks angeordneten Zentrierloch (5) aufgenommen wird, wobei eines der Löcher angrenzend an dem Zentrierloch einen Aufnahmeraum (7) zur Aufnahme eines Klebers zum Fixieren des Lichtleiters im Zentrierstück bildet, wobei der Kleber durch ein Zuführungsloch (6) einführbar ist, das in dem Aufnahmeraum mündet, wobei das Zentrierstück ferner eine zylindrische Hülse (10) aufweist, die in einem der Löcher (13) angeordnet ist, welches im rückwärtigen Bereich des Zentrierstückes liegt, wobie die Hülse axial mit einer kalibrierten Bohrung (11) versehen ist, die zum Durchführen des umhüllten Teils des Lichtleiters mit Spiel dient, wobei die Hülse ausreichend lang ist und mit seinem vorderen Ende ausreichend nah an dem Zentrierlock (5) liegt, damit die Länge des Aufnahmerausmes für den Kleber und somit der Abstand, über den der Lichtleiter verklebt wird, ausreichend klein sind, um keine Schwächung in dem Lichtleiter hervorzurufen, wobie die kalibrierte Bohrung (11) der Hülse (10) einen Durchmesser hat, der im wesentlichen gleich dem des Lichleiters ist, wenn er seine Schutzhülle besitzt, vergrößert um die Summe der Toleranz der Exzentrizität zwischen der achse (YY') des Zentrierloches (5) des Körpers des Zentrierstückes und der Achse (XX') der kalibrierten Bohrung (11) der Hülse und der Exzentrizitätstoleranz der Schutzhülle des Lichtleiters.

2. Zentrierstück nach Anspruch 1, dadurch gekennzeichnet, daß die Bohrung (11) der Hülse (10) einen Durchmesser hat, der ungefähr das 1,5-fache des mit seiner Schutzhülle versehenen Lichtleiters beträgt.

3. Zentrierstück nach Anspruch 1 oder 2, dadurch gekennzeichnet, daß die Hülse (10) eine Länge in der Größenordnung von 10 bis 15 mm hat.

4. Zentrierstück nach einem der vorhergehenden Ansprüche, dadurch gekennzeichnet, daß die Hülse (10) eine Länge von 14 mm für eine Bohrung (11) von 0,3 mm, der Aufnahmeraum (7) eine Länge von 5 mm bei einem Durchmesser von 0,7 mm, das Zentrierloch (5) eine Länge von 1 mm bei einem Durchmesser von 0,3 mm und eine konische Fase (8) von 0,5 mm besitzt.

5. Zentrierstück nach einem der vorhergehenden Ansprüche, dadurch gekennzeichnet, daß die Hülse (10) ein metallisches Teil ist, welche in einem aus Kunststoff bestehenden Körper des Zentrierstücks eingepreßt ist.

**Claims**

1. Centering member for an optical fiber provided with a mechanical protection sheath, comprising a generally cylindrical body presenting a front portion (1) and a rear portion (3) and being axially provided with openings having diameters progressively decreasing from the rear towards the front of the member for permitting the passage of the fiber, the fiber being arranged to be introduced from the rear of the member in order to have its end which is deprived of its protection sheath, received with a predetermined play through a centering hole (5) situated at the front of the member, one of said holes adjacent to the centering hole forming a cavity (7) for receiving an adhesive intended to fix the fiber in the member, the adhesive being intended to be introduced by a feeding hole (6) opening into said receiving cavity, said member further comprising a cylindrical sleeve (10) disposed in the one of said holes (13) situated at the rear of the said member, said sleeve being axially provided with a calibrated bore (11) intended to permit the passage of the sheathed portion of the fiber with play, the sleeve being sufficiently long and having its front end extend sufficiently close to the centering hole (5) so that the length of the cavity receiving the adhesive and accordingly the distance along which the fiber is intended to be fixed, are sufficiently small in order not to provoke any dimming in the fiber, the calibrated bore (11) of the sleeve (10) having a diameter substantially equal to that of said fiber when it is provided with its protection sheath, increased by the sum of the tolerance of excentricity between the axis (YY') of the centering hole (5) of the body of said member and the axis (XX') of the calibrated bore (11) of the sleeve, and of the tolerance of excentricity of said protection sheath of the fiber.

2. Member according to claim 1, characterized in that the bore (11) of the sleeve (10) has a diameter equal to about 1.5 times the diamter of the fiber provided with its protection sheath.

3. Member according to any of the claims 1 or 2, characterized in that the sleeve (10) has a length in the order of 10 to 15 mm.

4. Member according to any of the preceding claims, characterized in that the sleeve (10) has a length of 14 mm for a bore (11) of 0,3 mm, the cavity (7) has a length of 5 mm for a diameter of 0,7 mm, the centering hole (5) has a length of 1 mm for a diameter of 0,3 mm and a colonial chamfer (8) of 0,5 mm.

5. Member according to any of the preceding claims, characterized in that the sleeve (10) is a metallic piece forcibly mounted in a body of the member made of plastic material.

0 097 576

FIG_1

FIG_2

FIG_3

FIG_4